# EUROPEAN PATENT APPLICATION

(11) **EP 0 585 494 A1**
(43) Date of publication of application: **09.03.1994**
(21) Application number: 92202676.0
(22) Date of filing: 03.09.1992
(51) Int. Cl.: B23Q 3/00, B23Q 3/154

(54) **Top plate for magnetic devices**

(71) Applicant: Walker-Hagou B.V., NL-5531 AD Bladel (NL)
(72) Inventor: Luyten, Cornelis Theodorus Petrus Maria, NL-5595 HN Leende (NL); Vernikov, Arkady Jakovlevich, NL-5501 DE Veldhoven (NL)
(74) Representative: Metman, Karel Johannes

(57) **Abstract**

A top plate (1) for magnetic devices, such as chucks, lifters, clamps etc. comprises a plurality of elongate magnetic piece means regularly spaced apart and separated by non-magnetic material in a direction substantially perpendicular to the length thereof and parallel to a clamping surface (7) formed. The non-magnetic material consists of a coating (8) on the magnetic piece means (6) joint to form the top plate.

## Description

The present invention relates to a top plate for magnetic devices, such as chucks, lifters, clamps etc. comprising a plurality of elongate magnetic piece means regularly spaced apart and separated by non-magnetic material in a direction substantially perpendicular to the length thereof and parallel to a clamping surface formed.

In prior art top plates of this type are made of joint magnetic and non-magnetic pieces or materials (see US-A-2,327,748, US-A-3,039,026). Different material parts cause different mechanical and heat deformations in the separate parts during use. This makes it difficult to build an accurate magnetic holding device and a rigid face for lifters or conveyors. Moreover, the production of top plates is the most complicated operation in magnet manufacture because it is difficult to achieve a reliable unity of different materials.

To solve these problems it has been proposed to make the top plate of solid magnetoanisotropic material (see GB-A-2 178 902). However, such materials are very expensive. For producing such top plates powder technology is mostly used and it is difficult to achieve good mechanical and thermal properties which are necessary for the top plates of magnetic holding devices.

The object of the present invention is to provide a top plate of the type mentioned in the preamble, in which the above-mentioned drawbacks are eliminated or at least reduced.

For this purpose the top plate according to the invention is characterized in that the non-magnetic material consists of a coating on the magnetic piece means joint to form the top plate.

In this manner the non-magnetic intervals or air gaps in the top plate are formed by the coating on the magnetic piece means. This coating has only a very small influence on the thermal and mechanical properties of the top plate, so that the top plate almost behaves like a solid plate made from the material of the magnetic piece means, mostly steel. Surprisingly the holding force of such magnetic device is comparatively high as a result of the fact that the non-magnetic interval between the magnetic piece means cause a sufficiently high magnetic resistance. Due to the small pole pitch which can be achieved by the invention the magnetic holding device is able to hold very thin or small parts in case it is used as clamp or chuck.

A further advantage of this technique is that with a proper choise of coating material, the coefficient of friction of the top plate surface against a workpiece can be improved, resulting in an improved grip on the workpiece.

According to the invention it is possible to obtain a high ratio between non-magnetic intervals and a thickness of the magnetic piece means, for example in the order between 1 : 10 and 1 : 20.

This high ratio results in a rather high flux and also in favourable mechanical and thermal properties which are very close to a solid plate made from the material of the magnetic pieces. The appearance of the upper surface of the top plate according to the invention is also like a solid plate.

A preferred range of the thickness of the magnetic pieces is appr. 0.1 - 0.5 mm and of the non-magnetic interval appr. 0.005 - 0.03 mm.

The coating on the magnetic pieces may be of various materials. It may consist of a non-magnetic metal, such as tin or brass or it may be a plastic material or a lacquer or the like. On the other hand the coating may consist of a glue which has the advantage that this coating not only serves as a non-magnetic interval, but also as means for uniting and bonding the magnetic pieces. Alternatively, it is possible to use mechanical clamping means or a welding, soldering or brazing technique.

According to the invention it is possible to make the top plate both of a plurality of individual magnetic pieces, and of a single magnetic piece which is spirally wound and the windings of which form the plurality of magnetic piece means.

The invention will hereafter be elucidated with reference to the drawing showing an embodiment of the invention by way of example.

Fig. 1 is a very schematic perspective view of a magnetic chuck including an embodiment of the top plate according to the invention.

Fig. 2 shows detail II in Fig. 1 on a very large scale.

The drawing shows an embodiment of a top plate 1 which is incorporated in a magnetic chuck for magnetically holding a workpiece to be machined on a machine tool. It should be understood, however, that the top plate according to the invention may also be used in other types of magnetic devices such as lifters and clamps.

The chuck comprises a base plate 2, an elongate core 3 extending parallel between the base plate 2 and the top plate 1 and two lateral return poles 4. Around the core 3 there are wound coils 5 forming a magnetic field source when connected to a d-c power supply source. If the coils 5 are energized the generated magnetic flux formes a closed circuit through the base plate 2, the core 3, the top plate 1, a workpiece (not shown) if positioned on the top plate 1, and through the return poles 4. Of course, other types of inner systems can be used. For example, the coils may be replaced by a spiral steel band.

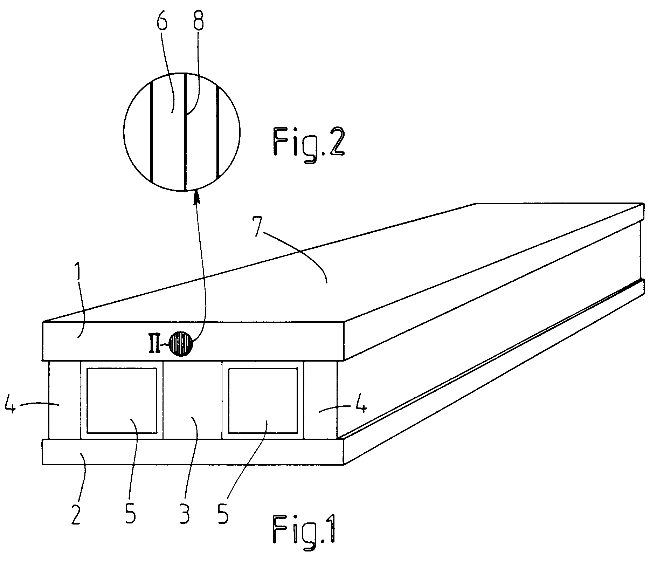

According to the present invention and as shown in Fig. 2, the top plate 1 is made of a plurality of magnetizable thin steel pieces 6 which are positioned side by side so as to form a flat clamping surface 7, but which are separated by a very thin coating 8 forming the non-magnetic interval or air gap between the steel pieces 6. As appears from Fig. 2 the coating 8 is much thinner than the steel pieces 6 and preferably the ratio between the thicknesses of the non-magnetic coating 8 and the magnetic steel pieces 6 is between 1 : 10 and 1 : 20. Such ratio may for instance be obtained with coatings 8 of 0.005 - 0.03 mm thickness and steel pieces 6 of 0.1 - 0.5 mm thickness.

The coating 8 may be any non-magnetic material and is suitably a material which allows for a technologically easy connection of the steel pieces 6. Examples of coating materials are thin, brass, plastic and glue. The latter has a further advantage that it may also serve as means for bonding the steel pieces 6. The steel pieces 6 may also be united by other technological processes such as pressing, soldering and heating. Alternatively the steel pieces 6 may include one or more holes to form a through bore parallel to the support face 7 for insertion of a tie rod clamping the steel pieces 6 together.

Investigations have shown that the top plate according to the invention provides superior mechanical and thermal properties very close to solid steel plates. The clamping surface 7 of the top plate also looks like solid material. The top plate according to the invention also allows for holding very thin or small parts and at the same time the magnetic holding device is able to produce rather high fluxes for clamping big parts. The production of the top plate is comparatively simple, since only magnetic pieces bearing a coating have to be united instead of magnetic and non-magnetic material parts having different properties.

The invention is not restricted to the embodiment shown in the drawing and described herein before, which may be varied in different manners within the scope of the invention. The arrangement of the magnetic pieces in the top plate may for instance be radial when the top plate is circular.

According to the invention it is also possible to make the top plate out of one single magnetic piece that is spirally wound into a circular or rectangular top plate.

## Claims

1. Top plate (1) for magnetic devices, such as chucks, lifters, clamps etc. comprising a plurality of elongate magnetic piece means (6) regularly spaced apart and separated by non-magnetic material in a direction substantially perpendicular to the length thereof and parallel to a clamping surface (7) formed, **characterized** in that the non-magnetic material consists of a coating (8) on the magnetic piece means (6) joint to form the top plate.

2. Top plate of claim 1, wherein the plurality of magnetic piece means (1) are individual magnetic pieces.

3. Top plate of claim 1, wherein the plurality of magnetic piece means are the windings of a spirally wound single magnetic piece.

4. Top plate of one of claims 1-3, wherein the thickness of the magnetic pieces in a direction perpendicular to the length thereof and parallel to the clamping surface is small.

5. Top plate of claim 4, wherein the ratio between non-magnetic interval and magnetic piece thickness is high, preferably between appr. 1 : 10 and 1 : 20.

6. Top plate of claim 4 or 5, wherein the thickness of the magnetic pieces (6) is appr. 0.1 - 0.5 mm and the non-magnetic interval (8) is appr. 0.005 - 0.03 mm.

7. Top plate of one of claims 1-6, wherein the coating (8) is a glue.

8. Top plate of one of claims 1-6, wherein the coating (8) is a non-magnetic metal, such as tin or brass.

9. Top plate of one of claims 1-6, wherein the coating (8) is a plastic, lacquer or the like.

10. Top plate of one of claims 8 and 9, wherein the coated magnetic pieces (6) are united by separate fastening means.

11. Magnetic holding device including the top plate (1) of one of the preceding claims.
